Europäisches Patentamt

European Patent Office

Office européen des brevets

(19)

(11) **EP 1 255 345 A1**

(12) **EUROPEAN PATENT APPLICATION**

(43) Date of publication:
06.11.2002 Bulletin 2002/45

(51) Int Cl.⁷: $H02K\ 3/28$

(21) Application number: 01110700.0

(22) Date of filing: 02.05.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **HSU, CHUN-PU**
**TAIPEI HSIEN; TAIWAN, R.O.C. (TW)**

(72) Inventor: **HSU, CHUN-PU**
**TAIPEI HSIEN; TAIWAN, R.O.C. (TW)**

(74) Representative:
**Schnekenbühl, Robert Matthias L.**
**DTS München Patent-**
**und Rechtsanwälte**
**St.-Anna-Strasse 15**
**80538 München (DE)**

(54) **High performance stator device**

(57)  A high performance stator device is used to a stator device of an electromotive machine or a generator. The stator portion of an electromotive machine or a generator is provided with a plurality of coils. The wire head and wire tail of each coil are independent. Various coils are connected through a switch control system. Then the connected stator has a single phases or three phases network forms. Through the control of a switch control system, the numbers of windings of the stator portion can have various forms. The change of the number of windings may change the inverse electromotive force $K_E$ and twisting force constant $K_T$. In the low, middle, and high operation ranges, the electromotive machine or generator may retain average high operation efficiency. Moreover, the $K_T$ is increased greatly, since $T = K_T \cdot I$, so the output twisting force has various forms.

FIG. 1A

**Description**

*FIELD OF THE INVENTION*

The present invention relates to a high performance stator device, wherein the inverse electromotive force $K_E$ and twisting force constant $K_E$ can be changed by the present invention easily. Therefore, the inverse electromotive force $K_E$ and twisting force constant $K_T$ in the same electromotive machine or generator can be changed as the requirement of a load. Similarly, for a generator in operation, the inverse electromotive force $K_E$ can be changed according to the requirement of output voltage of the generator. It can be described by the following equation:

$$E = K_E \cdot \Omega$$

$$K_E = D \cdot B \cdot L \cdot Z/2$$

$$T = K_T \cdot I_a$$

$$K_T = D \cdot B \cdot L \cdot Z/2$$

E is the voltage of inverse electromotive force vertical (Volt)
T is the output twisting force (N-m)
$K_E$ is an inverse electromotive force constant
$K_T$ is an twisting force constant
$\Omega$ is the rotary speed of an armature (red/sec)
$I_a$ is the current of armature (Ampere)
B is magnetic flux density of air gap (Gauss)
D is an outer diameter of an armature (cm)
L is stacking thickness (cm)
Z is the total conductor number

**[0002]** From above equation, it is known the inverse electromotive force $K_E$ is equal to the twisting force constant $K_T$. Furthermore, the total conductor number Z is positive proportional to the $K_E$ and $K_T$. Therefore, as the total conductor number Z in the same electromotive machine or generator changed, then the inverse electromotive force $K_E$ and twisting force constant $K_T$ changed therewith.

*BACKGROUND OF THE INVENTION*

From the equation of $T = K_t \cdot I_a$, it is known that the twisting force T is resulted from the twisting force constant $K_T$ multiplied by amature current $I_a$. However, the coils of the stator of the conventional electromotive machine is formed by a single winding of excited coil. Therefore, the twisting force constant is a constant value. Therefore, if it is desired to changed the twisting force T of an electromotive machine, it must change $I_a$. A larger T is acquired from a larger $I_a$. But a too larger $I_a$ is not beneficial to the efficiency of an electromotive machine.

$$P = I^2 \cdot R$$

P: power consumption in the coil of an electromotive machine.
I: armature current
R: impedance of a coil

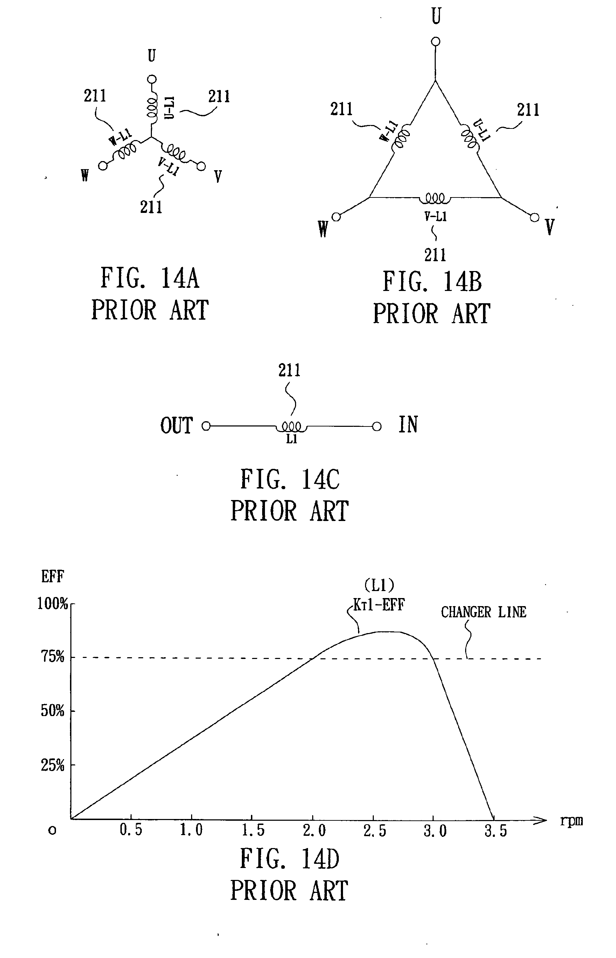

Therefore, it is knows that if the current is enlarged, then the power will become a square value so that the heat resistance of the coil is increased. Thus, the temperature of the electromotive machine is incremented to deteriorate the efficiency of the electromotive machine. Referring to Fig. 14D, in the output operational efficiency curve of the stator portion with the twisting force constant $K_T$, it is appreciated that the preferred operation range of the electromotive machine is from 2.0 to 3.0 time of rpm operation.

Meanwhile, since $E = K_E \cdot \Omega$, if the generator is in a constant opertion speed, since stator portion is a single winding coil, the inverse electromotive force KE must be fixed, and thus, the inverse electromotive voltage E is retained in a fixed value, can't be changed.

As the operation efficiency of an electromotive machine or a generator from the low speed to the higher speed is not in a fixed value (Referring to Fig. 14D), even there is a high operation efficiency EFF, since the speed of the electromotive machine or generator must be changed in the low, middle or high operation speed due to the requirement of operation, it is obvious that the electromotive machine or generator must have EFFs of low, middle and high efficiency with the change of the rotary speed.

*SUMMARY OF THE INVENTION*

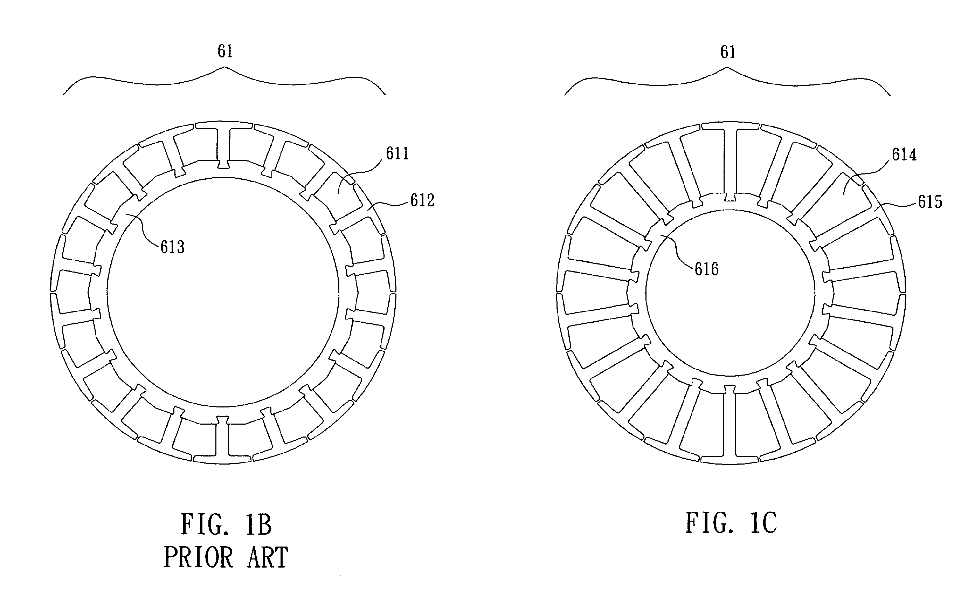

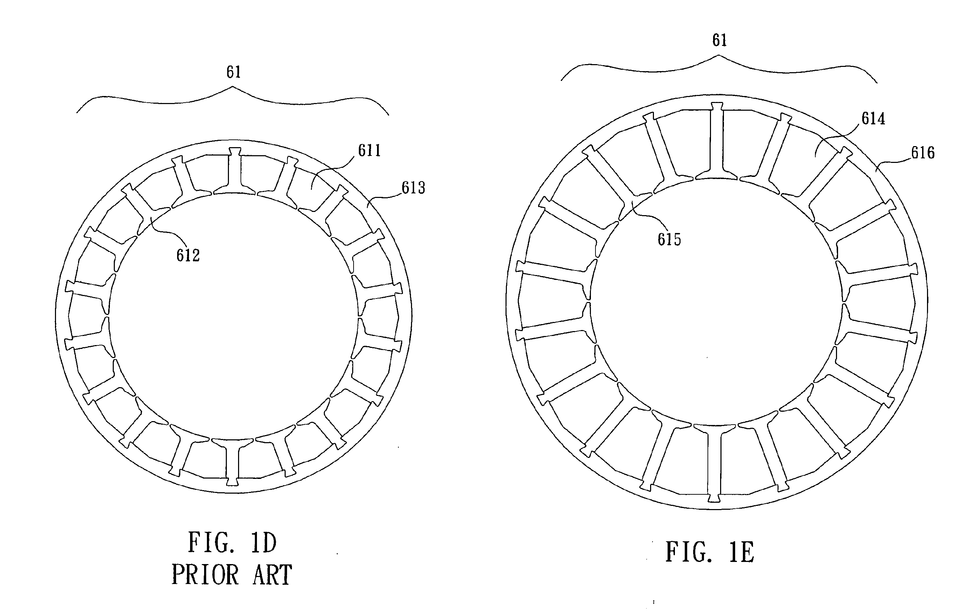

Since the prior art stator portion is a single winding coil, the inverse electromotive force $K_E$ and twisting force constant $K_T$ must be fixed. Therefore, the preferred operation range is finite (referring Fig. 14D), in the present invention, the area of wire groove in the stator portion is enlarged properly (Figs. 1B and 1D shows an example that the wire grooves of the inner and outer stator portions are not be enlarged). The stator portion 61 has a general wire groove space 611, stator tooth portion 612, and stator ring portion 613. With reference to Figs. 1C and 1E, the wire grooves of the inner and outer stator portions are not be enlarged as in the the present invention, the stator portion 61 has a deeper wire groove space 614, a prolonged stator tooth portion 615 and a stator ring portion 616. It can be installed with a plurality of coils with different number of windings. This stator is controlled by a management control unit of a control system. The numbers of windings of the stator tooth portion can be varied. The change of the number of windings will change the inverse electromotive force $K_E$ and twisting force constant $K_T$ of an electromotive machine or a generator.

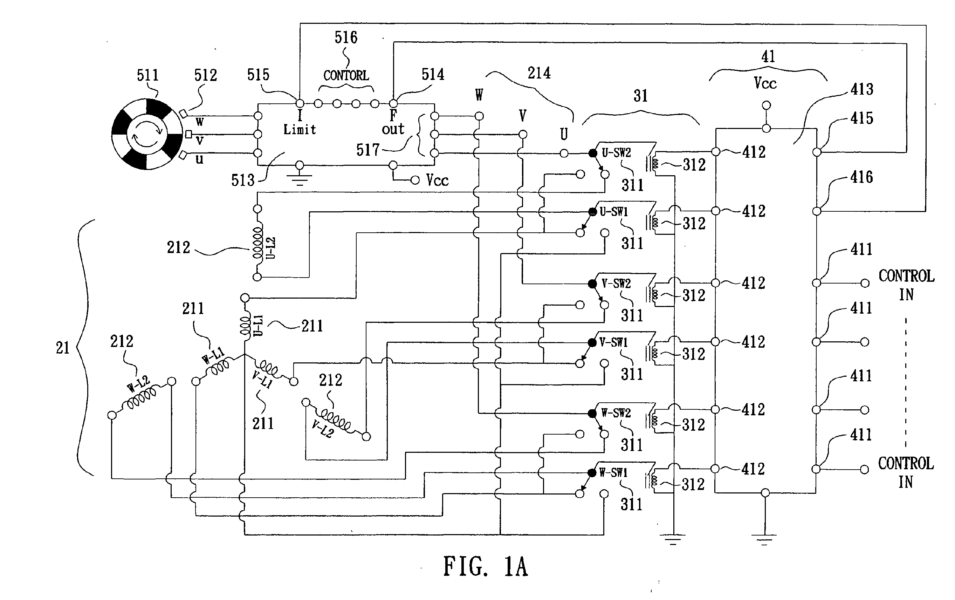

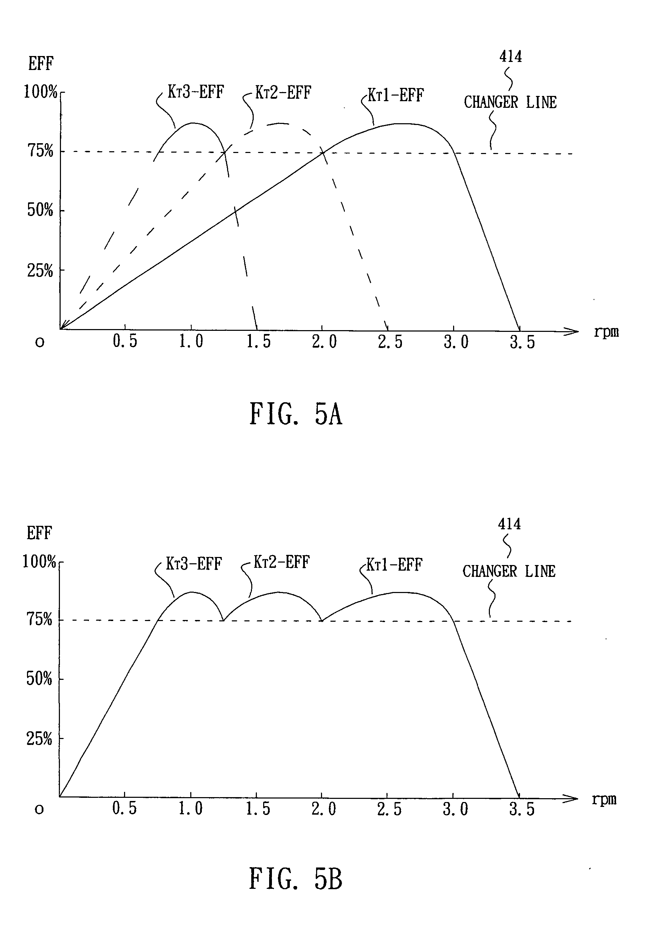

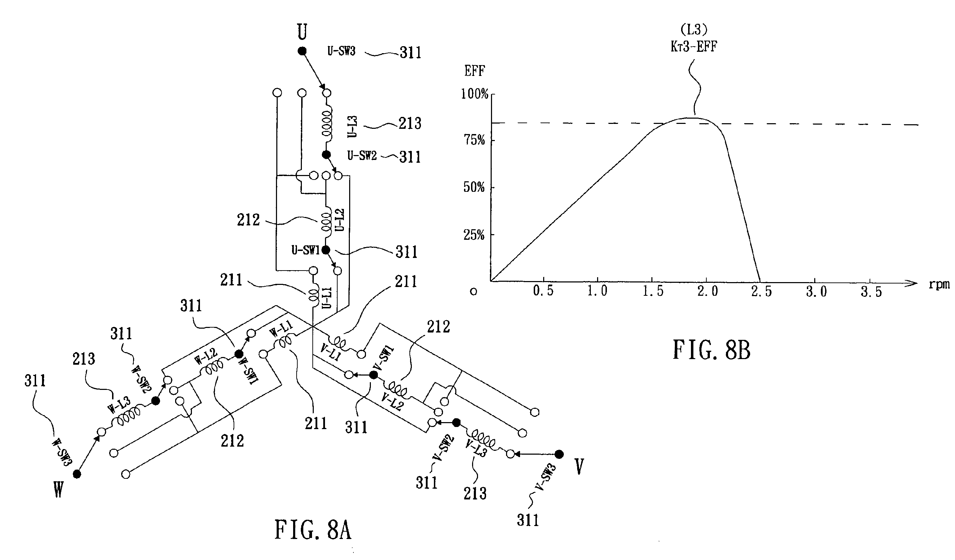

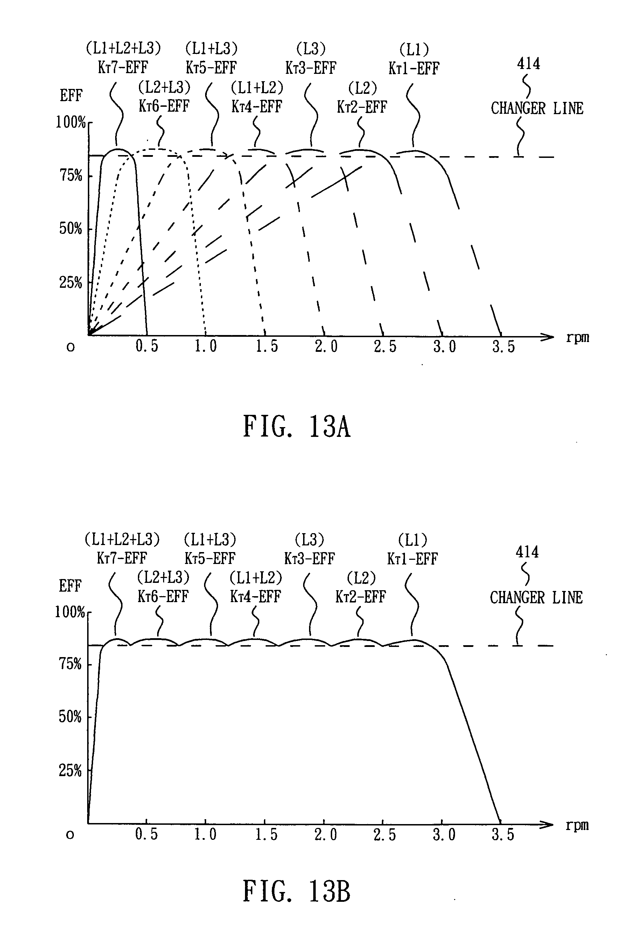

The proper change of the inverse electromotive force $K_E$ and twisting force constant $K_T$ will cause the change of the working range. Therefore, as shown in the figure 8A, 8B, 13A and 13B, the stator has a plurality of twisting force constant $K_T$s which covers the ranges of the lower, middle and high operation rotary ranges. Furthermore, as shown in Fig. 1A, a control system is illustrated. the rotary speed sensor 512, operation rotary speed detector 54 and the operational current sensor 515 output signals, then the signals 411 are inputted to the management control unit of a control system. Therefore, the twisting force constant $K_T$s of the electromotive machine or generator (referring to Figs. 5A, 5B, 13A and 13B) of the electromotive machine or generator generate a wider operation rotary speed range with a high efficiency EFF. Figs. 5A, 5B show the switching lines 414 of the control system.

Moreover, since the electromotive machine may retain with a high efficiency power out in the low and middle operational rotary speed. It represents that if the electromotive machine has a high operational twisting force in low and middle rotary speed. This can be described by the following equations:

$$T = P/n, \ T = K_T \cdot I, \ \text{and} \ E = K_E \cdot \Omega$$

T: motor output twisting force,
P: motor output power
n: motor rotary speed

In the present invention, the electromotive machine and generator can have a higher operation efficiency and can change the inverse electromotive force KE and twisting force constant KT quickly. Since the twisting force constant is positive proportional to the motor output power or $K_T$, the twisting force constant KT can be in an average level or a high level inverse electromotive voltage E can be acquired despite that it is in low or middle operation range.

The various objects and advantages of the present invention will be more readily understood from the following detailed description when read in conjunction with the appended drawing.

## BRIEF DESCRIPTION OF THE DRAWINGS

Fig. 1A shows the circuit connection of two Y type coils in the first embodiment of the present invention.

Fig. 1B is a schematic view showing the conventional wire groove of the inner stator portion.

Fig. 1C is a schematic view showing that the wire groove of the inner stator portion of the present invention has a larger depth.

Fig. 1D is a schematic view showing the conventional wire groove of the outer stator portion.

Fig. 1E is a schematic view showing the enlargement of the wire groove of the outer stator portion in the present invention.

Fig. 2A is a schematic view of the first embodiment in the present invention, wherein two Y type coils are switched to a stator coil L1 having a smaller number of windings by switches.

Fig. 2B is an operational efficiency curve of the network with less number of windings in the stator coil L1 of Fig. 2A.

Fig. 3A is a schematic view in the first embodiment of the present invention, wherein two Y type coils are switched to a stator coil L2 with much number of windings.

Fig. 3B shows an operation efficiency curve of the network having number of windings more than that shows in Fig. 3A.

Fig. 4A is a schematic view in the first embodiment of the present invention, wherein two Y type coils are switched to a serial connecting loop with stator coil having the number of windings (L1 + L2).

Fig. 4B shows an operation efficiency curve of the network having number of windings (L1 + L2) of Fig. 4A to be a maximum number.

Figs. 5A and 5B shows the operation efficiency curve in the first embodiment of the present invention, wherein three twisting force constant $K_T$ are combined so as to have a wider operation range.

Fig. 6A is a schematic view of the second embodiment in the present invention, wherein three Y type coils are switched to a stator coil L1 having a smallest number of windings by switches.

Fig. 6B is an operational efficiency curve of the network with less number of windings in the stator coil L1 of Fig. 6A.

Fig. 7A is a schematic view of the second embodiment in the present invention, wherein three Y type coils are switched to a stator coil L2 having a second smaller (next to the smallest) number of windings by switches.

Fig. 7B is an operational efficiency curve of the network with second smaller (next to the smallest) number of windings in the stator coil L2 of Fig. 7A.

Fig. 8A is a schematic view of the second embodiment in the present invention, wherein three Y type coils are switched to a stator coil L3 with a third smaller number of windings by switches.

Fig. 8B is an operational efficiency curve of the network with third smaller number of windings in the stator coil L3 of Fig. 8A.

Fig. 9A is a schematic view of the second embodiment in the present invention, wherein three Y type coils are switched to a stator coil L1 + L2 with a fourth smaller number of windings by switches.

Fig. 9B is an operational efficiency curve of the network with fourth smaller number of windings of the stator coil L1 + L2 of Fig. 9A.

Fig. 10A is a schematic view of the second embodiment in the present invention, wherein three Y type coils are switched to a stator coil L1 + L2 with a fifth smaller number of windings by switches.

Fig. 10B is an operational efficiency curve of the network with fifth smaller number of windings of the stator coil L1 + L3 of Fig. 10A.

Fig. 11A is a schematic view of the second embodiment in the present invention, wherein three Y type coils are switched to a stator coil L2 + L3 with a sixth smaller number of windings by switches.

Fig. 11B is an operational efficiency curve of the network with sixth smaller number of windings of the stator coil L2 + L2 of Fig. 11A.

Fig. 12A is a schematic view of the second embodiment in the present invention, wherein three Y type coils are switched to a stator coil L1 + L2 + L3 with a seventh smaller number of windings by switches.

Fig. 12B is an operational efficiency curve of the network with seventh smaller number of windings of the stator coil L1 + L2 + L3 of Fig. 12A.

Figs. 13A and 13B shows the operation efficiency curve in the second embodiment of the present invention, wherein seven twisting force constant KT are combined so as to have a wider operation range.

Figs. 14A to 14C are schematic views of the conventional Y type, Δ type and single phases coils.

Fig. 14D shows the operation efficiency curves of the stator coils L1 in Fig. 14A to 14C.

## DETAILED DESCRIPTION OF THE PREFERRED EMBODIMENTS

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

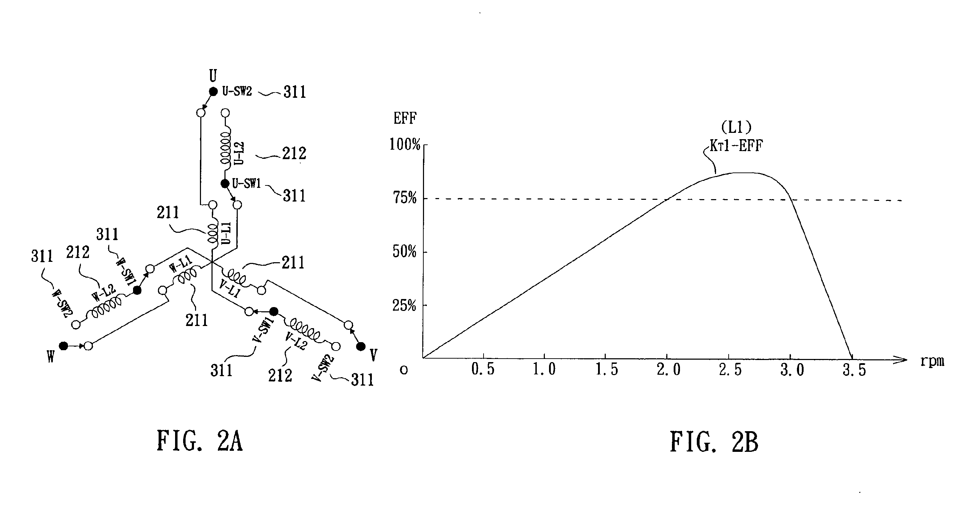

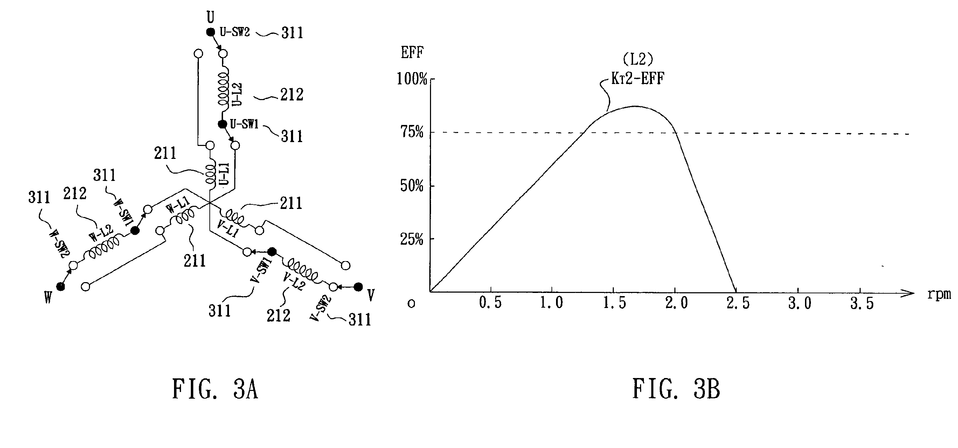

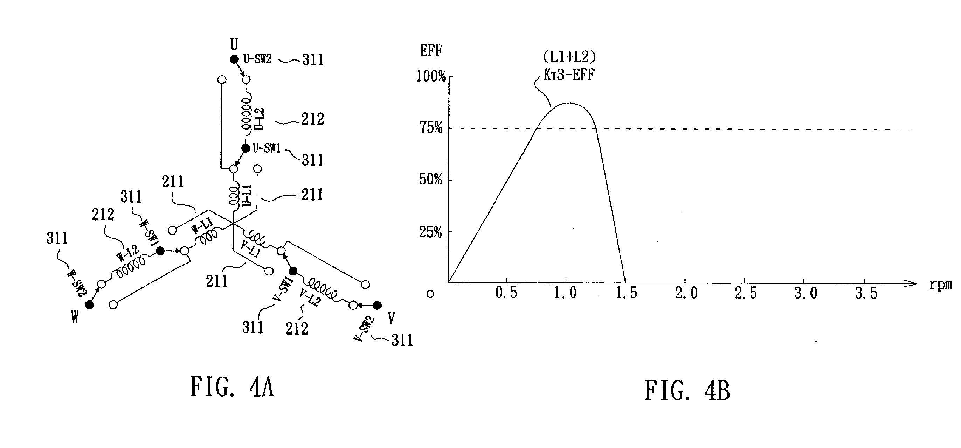

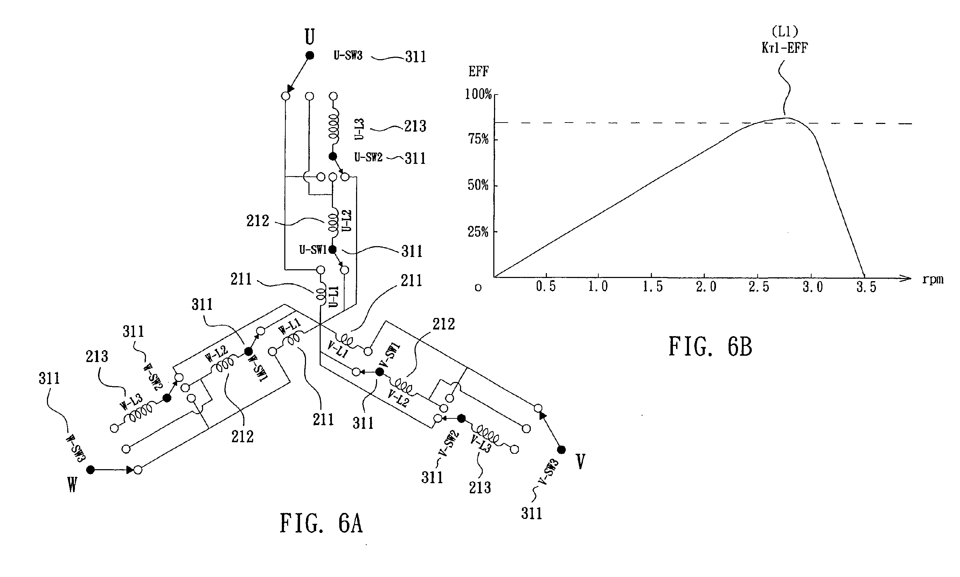

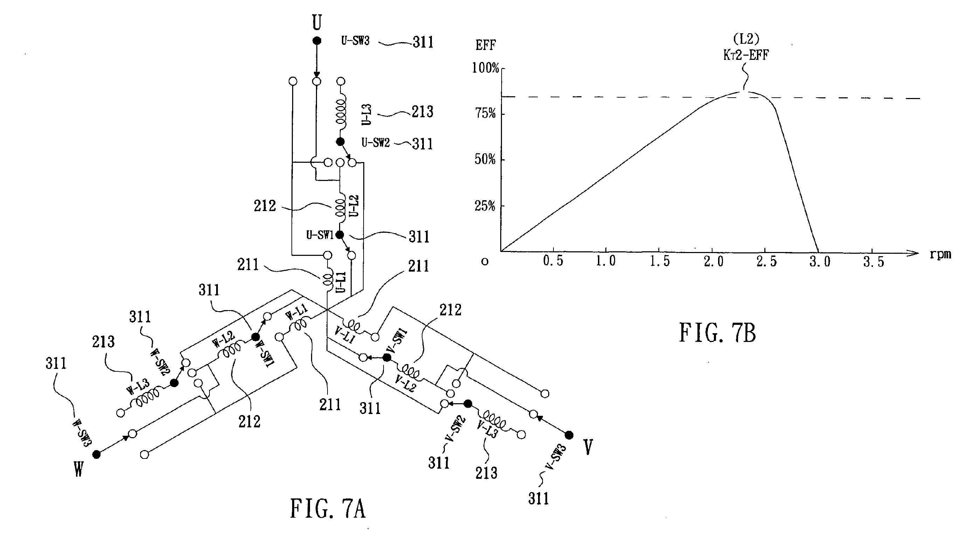

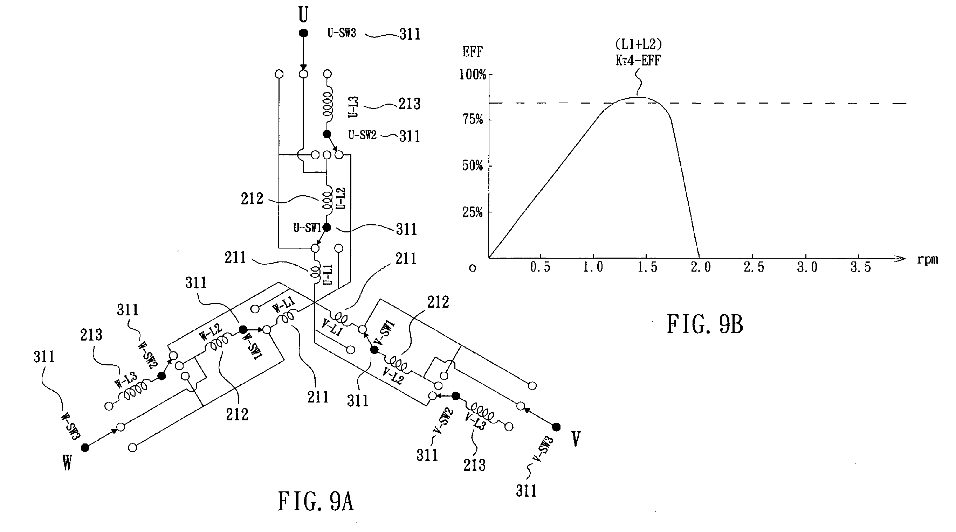

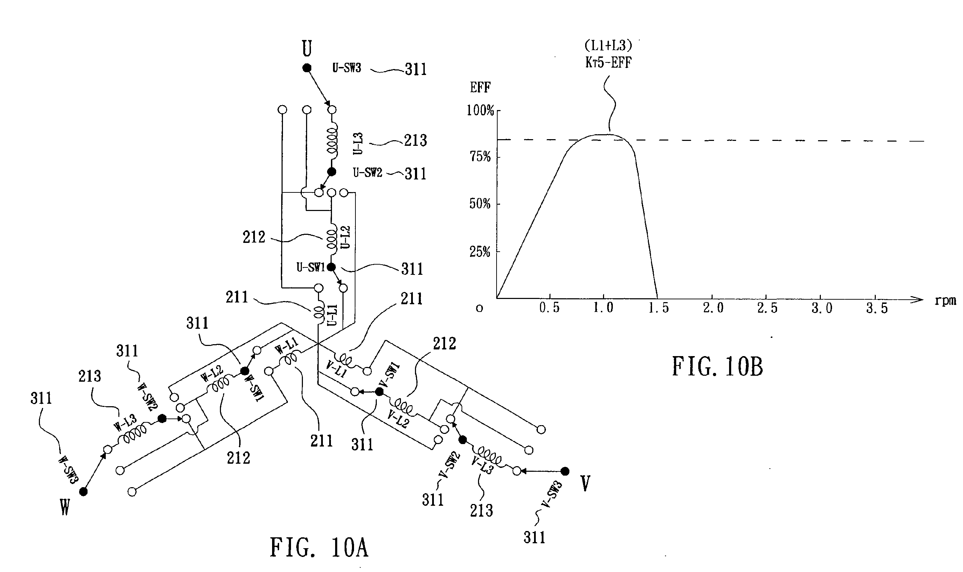

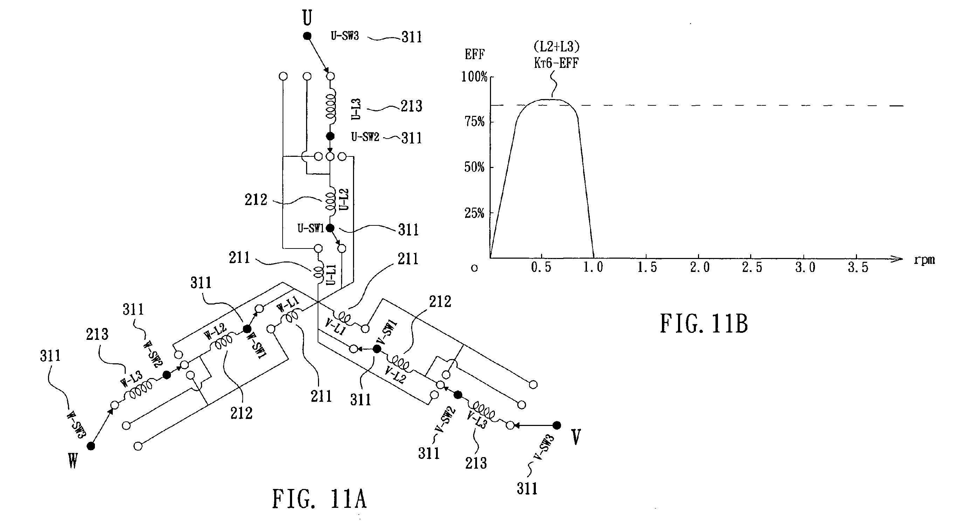

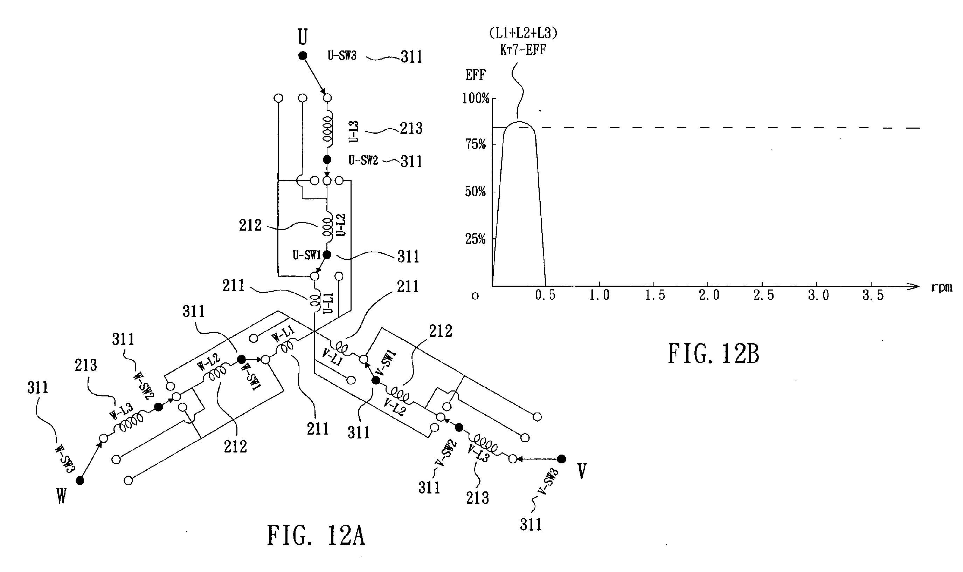

Referring to Figs. 1A, 1C and 1E to 13A and 13B. The electromotive machine 10 of the present invention is illustrated, which is especially a stator device used in the electromotive machines or generators. It includes the following components.

A stator portion 61 is provided to various stator coils 21 of single phases or three phases to be installed in stator grooves 614. The stator groove 614 has a proper larger space for receiving the stator coil windings with more winding number.

A plurality of stator coils 21 includes a plurality of stator coils 211, 212, and 213 with various numbers of windings. The coils are overlapped or adjacent arranged to be placed in the same stator portion 61, each of the coils 211, 212, and 213 being opened to other coil, and each of a wire head and wire tail of each of the stator coils 211, 212, and 213 being connected to a switches 31 so as to be formed with a Y type three phases connection 214.

A plurality of switches 31 each having an input end 312 controlled by the management control unit 413 of the control system 41 through the output point 412. The control joints 311 of the plurality of switches 31 are connected to the wire heads and wire tails of the stator coils 211, 212, and 213.

A control system 41 having a management control unit 413 therein sets the switching forms of switches. The management control unit 413 manages all the switching forms of the switches 31. After switching the switches 31, the coils 211, 212, and 213 of the stator portion 61 can be connected in series to be formed with different connections or selectively switching to any one of the coils 211, 212, and 213 so as to be formed with various networks of the coils with different numbers of windings. A coil winding network with various numbers of windings is formed in the stator portion 61 through the control of the management control unit 413 of the control system 41, i.e., in the network, various inverse electromotive force $K_E$ and twisting force constant $K_T$, as that disclosed in Fig. 1A, wherein an operation rotary speed device 511, a rotary speed sensor 512, a three phases coil controller 514, rotary speed detecting points 514, a current sensor 515 and control joints 516 are included.

Each of the coils 211, 212, and 213 may have the same or different numbers of windings. Through the management control unit 413 of the control system 41, the switches 31 can be switched to one of the coils 211, 212, and 213 or the plurality of coils 211, 212, and 213 can be partially or wholly connected in series to be formed as a winding network. The number of windings can be varied in any forms. The inverse electromotive force $K_E$ and twisting force constant $K_T$ may be varied in different ways.

The change of the management control unit 413 of the control system 41 is simulated by the inverse electromotive force $K_E$ and twisting force constant $K_T$ in advance to calculate various preferred operation area. Furthermore, the operation speed rmp value in a preferred operation area is used as a reference. The rotary speed sensor 512 is used to detect operation rotary speed signals (415) which is inputted to the control system 41 for being switched by the switches 31 as to change order.

The change of the management control unit 413 of the control system 41 is simulated by the inverse electromotive force $K_E$ and twisting force constant $K_T$ in advance to calculate various preferred operation area. Furthermore, the operation current value in a preferred operation area is used as a reference. The rotary speed sensor 512 is used to detect operation current signals 416 which is inputted to the control system 41 for being switched by the switches 31 as to change order.

The change of the management control unit 413 of the control system 41 is controlled manually. In this process, control signals are manually inputted through the control signal input 411 to the control system 41. The management control unit 413 of the control system 41 causes a switch signal output 412 to output the form of the input signal according to the form of the input signal from the control signal input 411 so that the switches 31 are switched to a winding network with respect to require number of windings.

The numbers of windings of the coils 211, 212, and 213 in the stator portion 61, inverse electromotive force $K_E$, twisting force constant $K_T$ can be varied in various forms. Therefore, in the lower, middle and high operation speed ranges of an electromotive machine or generators, the operational efficiencies in the whole area can be improved uniformly, thereby having a high EFF value.

The numbers of windings of the coils 211, 212, and 213 in the stator portion 61 may be varied in various forms, and thus the electromotive machine causes the numbers of windings of the coils 211, 212, and 213, twisting force constant $K_T$ and inverse electromotive force $K_E$ can be varied in low and middle operational speed with respect to the requirement of the output twisting force of the electromotive machine. Therefore, the output twisting force of the electromotive machine can be improved properly.

The numbers of windings, wire diameters, and winding ways of the coils 211, 212, and 213 can be changed with the change of the manufacturing method.

The switch 31 is a relay with joints for switching the coils 211, 212, and 213 of the stator portion 61.

The switch 31 is a jointless semiconductor device for switching the coils 211, 212, and 213 of the stator portion 61.

The coils 211, 212, and 213 has a three phases Y coil winding type for being changed and managed by the control system 41.

The coils 211, 212, and 213 has a single phases Δ coil winding type for being changed and managed by the control system 41.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A high performance stator device comprising:

a stator portion being provided to various stator coils to be installed in stator grooves; wherein the stator groove having a proper larger space for receiving windings of stator coil with more winding numbers;

a plurality of stator coils including a plurality of stator coils with various numbers of windings; the coils being overlapped or adjacent arranged to be placed in the same stator portion, each of the coils being opened to other coil; each of a wire head and wire tail of each of the stator coils being connected to a switches so as to be formed with a Y type three phases connection.

a plurality of switches each having an input end controlled by a management control unit of a control system through the output point; the control joints of the plurality of switches being connected to the wire heads and wire tails of the stator coils; and

the control system having a management control unit therein which sets the switching forms of switches; the management control unit managing all the switching forms of the switches; after switching the switches, the coils of the stator portion being connected in series to be formed with different connections or selectively switching to any one of the coils so as to be formed with various networks of the coils with different numbers of windings; a coil winding network with various numbers of windings being formed in the stator portion through the control of the management control unit of the control system, i.e., in the network, various inverse electromotive force $K_E$ and twisting force constant $K_T$.

2. The high performance stator device as claimed in claim 1, wherein there are at least three coils, and each of the coils have the same or different numbers of windings; through management control unit of the control system, the switches are switched to one of the coils or the plurality of coils are partially or wholly connected in series to be formed as a winding network; numbers of windings are varied in any forms; the inverse electromotive force $K_E$ and twisting force constant $K_T$ are varied in different ways.

3. The high performance stator device as claimed in claim 1, wherein there are at least two coils, and each of the coils have the same or different numbers of windings; through management control unit of the control system, the switches are switched to one of the coils or the plurality of coils are partially or wholly connected in series to be formed as a winding network; numbers of windings are varied in any forms; the inverse electromotive force $K_E$ and twisting force constant $K_T$ are varied in different ways.

4. The high performance stator device as claimed in claim 1, wherein change of the management control unit of the control system is simulated by the inverse electromotive force $K_E$ and twisting force constant $K_T$ in advance to calculate various preferred operation area; an operation speed rmp value in a preferred operation area being used as a reference; the rotary speed sensor is used to detect operation rotary speed signals which are inputted to the control system for being switched by the switches as to change orders.

5. The high performance stator device as claimed in claim 1, wherein change of the management control unit of the control system is simulated by the inverse electromotive force KE and twisting force constant KT in advance to calculate various preferred operation area; an operation current value in a preferred operation area is used as a reference; a rotary speed sensor is used to detect operation current signals which is inputted to the control system for being switched by the switches as to change orders.

6. The high performance stator device as claimed in claim 1, wherein change of the management control unit of the control system is controlled manually; in this process, control signals are manually inputted through the control signal input end to the control system; the management control unit of the control system cause a switch signal output end to output the form of the input signal according to the form of the input signal from the control signal input end so that the switches are switched to a winding network with respect to require number of windings.

7. The high performance stator device as claimed in claim 1, wherein numbers of windings of the coils in the stator portion, inverse electromotive force $K_E$, twisting force constant $K_T$ can be varied in various forms, thereby, in the lower, middle and high operation speed ranges of an electromotive machine or generators, the operational efficiencies in the whole areas are improved uniformly, thereby having a high EFF value.

8. The high performance stator device as claimed in claim 1, wherein numbers of windings of the coils in the stator portion are varied in various forms, and thus the electromotive machine causes the numbers of windings of the coils, twisting force constant $K_T$ and inverse electromotive force $K_E$ are be various in low and middle operational speed with respect to the requirement of the output twisting force of the electromotive machine; therefore, an output twisting force of the electromotive machine is improved properly.

9. The high performance stator device as claimed in claim 1, wherein numbers of windings, wire diameters, and winding ways of the stator coils are changed with changes of manufacturing methods.

10. The high performance stator device as claimed in claim 1, wherein the switch is a relay with joints for switching the coils of the stator portion.

11. The high performance stator device as claimed in claim 1, wherein the switch is a jointless semiconductor device for switching the coils of the stator portion.

12. The high performance stator device as claimed in claim 1, wherein the stator coils has a three phases Y coil winding type for being changed and managed by the control system.

13. The high performance stator device as claimed in claim 1, wherein the stator coils has a three phases Δ coil winding type for being changed and managed by the control system.

14. The high performance stator device as claimed in claim 1, wherein the stator coils has a single phases coil winding type for being changed and managed by the control system.

FIG. 1A

FIG. 1B
PRIOR ART

FIG. 1C

EP 1 255 345 A1

FIG. 1D
PRIOR ART

FIG. 1E

EP 1 255 345 A1

FIG. 2A

FIG. 2B

EP 1 255 345 A1

EP 1 255 345 A1

FIG. 3A

FIG. 3B

FIG. 4A

FIG. 4B

EP 1 255 345 A1

FIG. 5A

FIG. 5B

FIG. 6B

FIG. 6A

14

FIG. 7A

FIG. 7B

EP 1 255 345 A1

FIG. 8A

FIG. 8B

FIG. 9B

FIG. 9A

FIG. 10A

FIG. 10B

FIG. 11A

FIG. 11B

EP 1 255 345 A1

FIG. 12A

FIG. 12B

FIG. 13A

FIG. 13B

FIG. 14A
PRIOR ART

FIG. 14B
PRIOR ART

FIG. 14C
PRIOR ART

FIG. 14D
PRIOR ART

## PARTIAL EUROPEAN SEARCH REPORT

**European Patent Office**

which under Rule 45 of the European Patent Convention shall be considered, for the purposes of subsequent proceedings, as the European search report

**Application Number**

EP 01 11 0700

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 547 243 A (FANUC LTD) 23 June 1993 (1993-06-23) | 1-5, 10-12 | H02K3/28 |
| Y | * column 3, line 13 - column 4, line 35 * * column 5, line 10 - line 42; figures 1-4 * | 6,13,14 | |
| Y | US 4 547 689 A (SUZUKI YASURO ET AL) 15 October 1985 (1985-10-15) * column 4, line 1 - column 6, line 51; figures 3,8,9 * | 6,13,14 | |
| X | US 5 614 799 A (ANDERSON WILLIAM G ET AL) 25 March 1997 (1997-03-25) * column 3, line 56 - column 6, line 45; figures 1-5 * | 1-5,10, 12,13 | |
| X | US 5 821 660 A (ANDERSON WILLIAM G) 13 October 1998 (1998-10-13) * column 3, line 30 - column 6, line 43; figures 1-4 * | 1-5,10, 12 | |

--/--

**TECHNICAL FIELDS SEARCHED (Int.Cl.7)**

H02K
H02P

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 14 August 2001 | Tangocci, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**     **INCOMPLETE SEARCH SHEET C**     Application Number    EP 01 11 0700

Claim(s) searched completely:
    4-6, 10-14

Claim(s) searched incompletely:
    1-3

Claim(s) not searched:
    7-9

Reason for the limitation of the search:

The subject-matter of claims 1-3 is not entirely clear in the sense of
Article 84 EPC. In particular:
Claim 1: lines 3 and 4 of page 13 ( it is not clear to what is compared
the groove space by saying that it is larger and receives more winding
numbers)  and line 21 of page 13 to line 1 of page 14 (the expressions
"different connections.... so as to be formed with various networks,
different numbers of windings" are vague and do not refer to defined
technical features as required by Rule 29 (1) EPC.
The same for claims 2 and 3: expressions like "numbers of windings are
varied in any form" or "the inverse electromotive force and twisting
force constant are varied in different ways" are vague and a meaningful
search is not possible.

Claims 7 and 8 attempt to define the matter for which protection is
sought in terms of the result to be achieved. A meaningful search is not
possible. Article 84 EPC.

The subject-matter of claim 9 is not clear, for it refers to numbers of
windings, wire diameters and winding ways of the stator coils which are
changed by means of obscure "changes of manufacturing methods" rendering
a meaningful search impossible. Article 84 EPC.

**European Patent Office**

**PARTIAL EUROPEAN SEARCH REPORT**

Application Number

EP 01 11 0700

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| Y | US 5 619 085 A (SHRAMO DANIEL J) 8 April 1997 (1997-04-08) * column 5, line 16 - line 30 * * column 9, line 64 - column 14, line 63; figures 16-20 * | 1-5, 10-13 | |
| Y | EP 0 378 693 A (FANUC LTD) 25 July 1990 (1990-07-25) * column 2, line 50 - column 5, line 6; figures 1-4 * | 1-5, 10-13 | |
| Y | US 5 786 673 A (JOHNSON RONALD A) 28 July 1998 (1998-07-28) * column 3, line 50 - column 5, line 65; figures 1,2 * | 1-5, 10-13 | TECHNICAL FIELDS SEARCHED (Int.Cl.7) |
| Y | US 4 691 155 A (TAYLOR NOEL R ET AL) 1 September 1987 (1987-09-01) * abstract; figures 2-5 * | 1-5, 10-13 | |
| A | EP 0 397 891 A (DIEMEN FILMS LTD) 22 November 1990 (1990-11-22) * abstract; figures 1-4 * | 1-14 | |
| A | US 3 935 519 A (PFARRER DAVID M ET AL) 27 January 1976 (1976-01-27) * abstract; figures 2-5 * | 1-14 | |

EPO FORM 1503 03.82 (P04C10)

**ANNEX TO THE EUROPEAN SEARCH REPORT
ON EUROPEAN PATENT APPLICATION NO.**

EP 01 11 0700

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2001

| Patent document cited in search report | | Publication date | Patent family member(s) | | Publication date |
|---|---|---|---|---|---|
| EP 0547243 | A | 23-06-1993 | JP 3037471 B | | 24-04-2000 |
| | | | JP 5022990 A | | 29-01-1993 |
| | | | DE 69216062 D | | 30-01-1997 |
| | | | DE 69216062 T | | 03-04-1997 |
| | | | WO 9301653 A | | 21-01-1993 |
| | | | KR 132904 B | | 20-04-1998 |
| | | | US 5352964 A | | 04-10-1994 |
| US 4547689 | A | 15-10-1985 | JP 1849032 C | | 07-06-1994 |
| | | | JP 5057813 B | | 25-08-1993 |
| | | | JP 58019137 A | | 04-02-1983 |
| US 5614799 | A | 25-03-1997 | NONE | | |
| US 5821660 | A | 13-10-1998 | CN 1247643 A | | 15-03-2000 |
| | | | DE 19782265 T | | 18-05-2000 |
| | | | WO 9839833 A | | 11-09-1998 |
| US 5619085 | A | 08-04-1997 | US 5425165 A | | 20-06-1995 |
| | | | US 5200661 A | | 06-04-1993 |
| | | | EP 0505476 A | | 30-09-1992 |
| | | | JP 5505299 T | | 05-08-1993 |
| | | | WO 9109449 A | | 27-06-1991 |
| EP 0378693 | A | 25-07-1990 | JP 1315231 A | | 20-12-1989 |
| | | | DE 68924480 D | | 09-11-1995 |
| | | | DE 68924480 T | | 05-06-1996 |
| | | | KR 9306288 Y | | 17-09-1993 |
| | | | WO 8912926 A | | 28-12-1989 |
| | | | US 5177423 A | | 05-01-1993 |
| US 5786673 | A | 28-07-1998 | US 5661379 A | | 26-08-1997 |
| US 4691155 | A | 01-09-1987 | US 4220440 A | | 02-09-1980 |
| | | | US 4508487 A | | 02-04-1985 |
| | | | US 4446415 A | | 01-05-1984 |
| | | | US 4413218 A | | 01-11-1983 |
| EP 0397891 | A | 22-11-1990 | JP 2151248 A | | 11-06-1990 |
| | | | JP 2788038 B | | 20-08-1998 |
| | | | WO 9006617 A | | 14-06-1990 |
| | | | KR 9305343 B | | 17-06-1993 |
| | | | US 5134332 A | | 28-07-1992 |
| US 3935519 | A | 27-01-1976 | AU 7690974 A | | 01-07-1976 |
| | | | CA 1017428 A | | 13-09-1977 |

For more details about this annex : see Official Journal of the European Patent Office, No. 12/82

## ANNEX TO THE EUROPEAN SEARCH REPORT
## ON EUROPEAN PATENT APPLICATION NO.

EP 01 11 0700

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2001

| Patent document cited in search report | Publication date | Patent family member(s) | | Publication date |
|---|---|---|---|---|
| US 3935519 A | | DE | 2500600 A | 31-07-1975 |
| | | DK | 669474 A | 15-09-1975 |
| | | FR | 2259331 A | 22-08-1975 |
| | | GB | 1487651 A | 05-10-1977 |
| | | GB | 1487652 A | 05-10-1977 |
| | | IT | 1026177 B | 20-09-1978 |
| | | JP | 50104411 A | 18-08-1975 |
| | | NL | 7500533 A | 28-07-1975 |
| | | SE | 7416154 A | 25-07-1975 |
| | | US | 4041542 A | 09-08-1977 |